# EUROPÄISCHE PATENTSCHRIFT

(11) **EP 4 005 190 B1**
(45) Veröffentlichungstag und Bekanntmachung des Hinweises auf die Patenterteilung: **09.12.2026**
(21) Anmeldenummer: 20771450.2
(22) Anmeldetag: 26.08.2020
(51) Int. Cl.: H04W 4/40, H04W 28/02, H04L 67/12, H04L 47/22, H04L 47/28, H04L 67/04, H04L 67/06, H04W 4/44

(54) **DATENVERBINDUNGBETRIEBSVERFAHREN, DATENÜBERMITTLUNGSEINHEIT UND FAHRZEUG MIT DATENÜBERMITTLUNGSEINHEIT**
DATA LINK OPERATING METHOD, DATA TRANSMISSION UNIT, AND VEHICLE WITH DATA TRANSMISSION UNIT
PROCÉDÉ DE FONCTIONNEMENT DE LIAISON DE DONNÉES, UNITÉ DE TRANSMISSION DE DONNÉES ET VÉHICULE ÉQUIPÉ D'UNE UNITÉ DE TRANSMISSION DE DONNÉES

(30) Priorität: 23.09.2019 DE 102019214476
(43) Veröffentlichungstag der Anmeldung: 01.06.2022
(73) Patentinhaber: Siemens Mobility GmbH, 80997 München (DE)
(72) Erfinder: PORSCH, Roland, 95469 Speichersdorf (DE)
(74) Vertreter: Siemens Patent Attorneys
(86) Internationale Anmeldenummer: PCT/EP2020/073799
(87) Internationale Veröffentlichungsnummer: WO 2021/058219

(56) Entgegenhaltungen:
- EP-A1- 3 107 243
- US-A1- 2012 327 787
- US-A1- 2013 016 624
- US-A1- 2013 196 621
- US-A1- 2017 070 616
- US-A1- 2018 249 017

## Beschreibung

Es werden ein Datenverbindungbetriebsverfahren, eine Datenübermittlungseinheit zur Durchführung des Datenverbindungbetriebsverfahrens und ein Fahrzeug mit einer Datenübermittlungseinheit angegeben.

Aus einer Vielzahl von Fahrzeugen wie beispielsweise schienengebundenen Fahrzeugen werden während der Fahrt Daten wie beispielsweise Statusmeldungen oder Passagierzahlen an eine stationäre Empfangsstation gesendet. Für eine solche Online-übertragung von Daten werden üblicherweise Mobilfunkkarten, sogenannte SIM-Karten (SIM: "subscriber identity module", Teilnehmer-Identitätsmodul), mit einem maximalen Datenvolumen pro Monat verwendet. Wird das maximale Datenvolumen einer SIM-Karte überschritten, erfolgt je nach Konfiguration beispielsweise ein sofortiger Kommunikationsabbruch ohne Vorwarnung an den Betreiber. Dies führt dazu, dass der stationäre Empfänger keine Informationen darüber erhält, warum er keine Daten mehr empfängt. Das Ausbleiben von Daten kann aber, neben dem vollständigen Ausschöpfen des Datenvolumens, andere Gründe wie beispielsweise Defekte im Sender, Defekte in der Antenne, Fahrten durch Regionen ohne Mobilfunkausleuchtung oder Fahrten durch Regionen ohne Roaming haben. Alternativ hierzu kann es auch möglich sein, dass ab dem Erreichen des maximalen Datenvolumens die Übertragung von Daten weiterhin stattfindet, dass aber erheblich höhere Kosten hierfür vom Netzbetreiber in Rechnung gestellt werden.

Abgemindert werden kann das Problem beispielsweise durch die Verwendung von einfacheren Filetransferprotokollen. Ein übliches Protokoll verwendet Quittungen, um sicherzustellen, dass eine Datei übertragen worden sein muss, bevor sie anschließend auf Fahrzeugseite gelöscht werden kann. Des Weiteren kann das übertragene Datenvolumen durch die Verwendung von Protokollen verringert werden, die einfacher sind als das momentan verwendete TCP/IP. Durch solche Umgehungslösungen kann aber das grundsätzliche Problem, dass ein Datenvolumen ohne Vorwarnung vollständig ausgeschöpft wird, nicht verhindert werden.

US 2012/327787 A1 und US 2013/016624 A1 offenbaren Datenverbindungbetriebsverfahren sowie Datenübermittlungseinheiten. US 2013/196621 A1 betrifft ein Datenverbindungbetriebsverfahren, bei dem gemäß mehreren Nutzungsplänen maximale Datenvolumen zur Übertragung vorgegeben sind und bei Erreichen eines vorgegebenen maximalen Datenvolumens eines Nutzungsplans die Datenübermittlung nach weiteren Nutzungsplänen priorisiert wird. EP 3 107 243 A1 lehrt ebenfalls ein Datenverbindungbetriebsverfahren, bei dem maximale Datenvolumen zur Übertragung vorgegeben werden können.

Ausgehend hiervon liegt der Erfindung die Aufgabe zugrunde, ein Datenverbindungbetriebsverfahren zum Betrieb einer drahtlosen Datenverbindung zwischen einem Fahrzeug und einer externen Einheit anzugeben, das die Möglichkeit bietet, derartigen Nachteilen entgegenzuwirken. Weitere Aufgaben liegen darin, eine Datenübermittlungseinheit zur Durchführung des Datenverbindungbetriebsverfahrens und ein Fahrzeug mit einer Datenübermittlungseinheit anzugeben.

Diese Aufgaben werden durch ein Verfahren und Gegenstände gemäß den unabhängigen Patentansprüchen gelöst. Vorteilhafte Ausführungsformen und Weiterbildungen des Verfahrens und der Gegenstände sind in den abhängigen Ansprüchen gekennzeichnet und gehen weiterhin aus der nachfolgenden Beschreibung und den Zeichnungen hervor.

Gemäß zumindest einer Ausführungsform wird mittels eines Datenverbindungbetriebsverfahrens eine drahtlose Datenverbindung betrieben. Das Datenverbindungbetriebsverfahren wird im Folgenden auch kurz als "Verfahren" bezeichnet. Die drahtlose Datenverbindung wird im Folgenden auch kurz als "Datenverbindung" bezeichnet. Bei dem Datenverbindungbetriebsverfahren erfolgt eine drahtlose Datenverbindung mittels einer Datenübermittlungseinheit zwischen einem Fahrzeug und einer externen Einheit innerhalb eines vorbestimmten Zeitraums. Insbesondere ist die Datenverbindung eine Datenverbindung über ein Übertragungsnetz. Vorzugsweise ist das Übertragungsnetz für eine drahtlose Datenverbindung nutzbar. Vorteilhafterweise ist das Übertragungsnetz für eine drahtlose Datenübertragung geeignet und insbesondere dafür eingerichtet. Besonders bevorzugt handelt es sich bei dem Übertragungsnetz um ein Mobilfunknetz. Zur Nutzung der Datenverbindung wird insbesondere eine SIM-Karte verwendet. Alternativ werden mehrere SIM-Karten verwendet, so dass mehrere Mobilfunknetze zur Verfügung stehen können. Das hier beschriebene Verfahren kann für jedes der Mobilfunknetze, also in Bezug auf jede der SIM-Karten, durchgeführt werden.

Gemäß einer weiteren Ausführungsform wird über die Datenübermittlungseinheit das Verfahrens durchgeführt, wobei über die Datenübermittlungseinheit Datenverbindungen über eines oder mehrere Übertragungsnetze bereitgestellt werden und das Verfahren für jedes Übertragungsnetz durchgeführt wird. Die Datenübermittlungseinheit ist somit dafür vorgesehen und eingerichtet, das Datenverbindungbetriebsverfahren durchzuführen. Entsprechend kann die Datenübermittlungseinheit eine oder mehrere SIM-Karten aufweisen, die eine Kommunikation über eines oder mehrere Übertragungsnetze ermöglichen. Gemäß einer weiteren Ausführungsform weist das Fahrzeug eine Datenübermittlungseinheit auf, mit der das Verfahren durchgeführt wird. Die vorherige und nachfolgende Beschreibung bezieht sich gleichermaßen auf das Verfahren, die Datenübermittlungseinheit und das Fahrzeug.

Das Fahrzeug ist vorzugsweise ein Fernverkehrsfahrzeug. Das Fahrzeug ist beispielsweise ein Bus oder ein Lastkraftwagen (LKW). In einer bevorzugten Ausführungsform ist das Fahrzeug ein Schienenfahrzeug wie etwa ein Zug. Die externe Einheit ist beispielsweise eine ortsgebundene Einheit, insbesondere eine landseitige Einheit. Beispielsweise ist die externe Einheit Teil einer Betriebszentrale, von der aus eine Koordinierung und/oder Diagnose des Fahrzeugs erfolgen kann. Weiterhin kann die externe Einheit auch ein anderes Fahrzeug sein.

Im vorbestimmten Zeitraum ist ein maximales Datenvolumen zur Übertragung von Datenpaketen, insbesondere vom Fahrzeug zur externen Einheit, über die Datenverbindung vorgesehen. Der vorbestimmte Zeitraum, der im Folgenden auch kurz als "Zeitraum" bezeichnet wird, ist Teil einer Folge von Zeiträumen, wobei für jeden der Zeiträume jeweils ein maximales Datenvolumen vorgesehen ist. Beispielsweise entspricht der vorbestimmte Zeitraum einem Kalendermonat, so dass die Folge von Zeiträumen eine Folge von aufeinanderfolgenden Kalendermonaten ist. Zu Beginn jedes Zeitraums steht ein Datenvolumen zur Verfügung, das dem maximalen Datenvolumen entspricht. Mit jedem Datenpaket, das innerhalb des Zeitraums über die Datenverbindung übermittelt wird, reduziert sich das restliche in diesem Zeitraum zur Verfügung stehende Datenvolumen. Durch die Nutzung der Datenverbindung wird somit Datenvolumen "verbraucht". Unabhängig vom Datenvolumenverbrauch innerhalb eines Zeitraums steht zu Beginn des nächsten Zeitraums wieder das dem maximalen Datenvolumen entsprechende Datenvolumen zur Verfügung.

Über die Datenverbindung findet besonders bevorzugt eine Datenübermittlung vom Fahrzeug zur externen Einheit statt. Daten, beispielsweise in Form von Dateien, die zur externen Einheit, also beispielsweise auf die Landseite, übertragen werden, sind von einem bestimmten Datentyp. Solche Datentypen sind beispielsweise Daten, die Ortsinformationen, also beispielsweise GNSS-Information (GNSS: "global navigation satellite system", globales Navigationssatellitensystem) enthalten, Daten, die Diagnoseinformationen enthalten, Daten, die Informationen von sogenannten Passenger-Counting-Systemen, also Systemen, die die Anzahl der ein- und aussteigenden Passagiere ermitteln, enthalten, sowie Daten, die abrechnungsrelevante Informationen enthalten. Weiterhin können solche Daten auch Logdateien für die Softwareentwicklung sein.

Gemäß einer weiteren Ausführungsform werden bei dem Verfahren ein oder mehrere Datenvolumen-Schwellwerte, im Folgenden auch kurz als "Schwellwerte" bezeichnet, festgelegt. Der eine oder die mehreren Datenvolumen-Schwellwerte sind jeweils kleiner oder gleich und bevorzugt kleiner als das maximale Datenvolumen. Beispielsweise wird ein Datenvolumen-Schwellwert bei einem Datenvolumen von 10% oder 25% oder 50% oder 75% oder 90% des maximalen Datenvolumens festgelegt. Mit anderen Worten wird ein Datenvolumen-Schwellwert erreicht, wenn entsprechend 10% oder 25% oder 50% oder 75% oder 90% des maximalen Datenvolumens verbraucht wurde. Eine Mehrzahl von Datenvolumen-Schwellwerten ist bevorzugt gestaffelt festgelegt, so dass die gestaffelten Schwellwerte bei fortschreitendem Datenverbrauch nacheinander erreicht werden.

Gemäß einer weiteren Ausführungsform wird ein temporäres Datenvolumen zu zumindest einem gegebenen Zeitpunkt innerhalb des vorbestimmten Zeitraums bestimmt, wobei das temporäre Datenvolumen der Summe der Datenpakete entspricht, die seit einem Beginn des Zeitraums bis zum gegebenen Zeitpunkt über die Datenverbindung übermittelt wurden. Das temporäre Datenvolumen gibt somit Auskunft darüber, wieviel Datenvolumen bisher im vorbestimmten Zeitraum verbraucht wurde. Der gegebene Zeitpunkt liegt beispielsweise jedes Mal nach der Übermittlung von Daten über die Datenverbindung vor. Mit anderen Worten wird, nachdem über die Datenverbindung ein Datenpaket geschickt wurde, ermittelt, welches Datenvolumen bisher seit Beginn des vorbestimmten Zeitraums verbraucht wurde. Dies kann auch bedeuten, dass vor dem Übermitteln von Daten das temporäre Datenvolumen ermittelt wird. Das temporäre Datenvolumen wird somit im laufenden Betrieb durch Aufsummieren der bisher übermittelten Daten ermittelt. Besonders bevorzugt werden hierzu aus den physikalischen Übertragungsschnittstellen wie beispielsweise PPP ("point-to-point protocol", Punktzu-Punkt-Protokoll) die Daten ausgelesen, die gesendet und empfangen werden. Das Auslesen aus den physikalischen Schnittstellen der Datenübermittlungseinheit ist vorteilhaft, da auch Protokollinformationen, die keine Nutzdaten enthalten, in das Datenvolumen, das verbraucht wird, eingehen. Bei Erreichen des Endes des vorbestimmten Zeitraums, was dem Beginn des nächsten Zeitraums entspricht, wird bevorzugt das bisher ermittelte temporäre Datenvolumen auf Null zurückgesetzt.

Gemäß einer weiteren Ausführungsform werden jedem der festgelegten Datenvolumen-Schwellwerte eine oder mehrere zugehörige Aktionen zugeordnet. Mit anderen Worten werden n Schwellwerte mit n ≥ 1 definiert, wobei jedem der n Schwellwerte m verschiedene Aktionen mit m ≥ 1 zugewiesen werden. Eine Aktion kann auch mehreren Schwellwerten zugeordnet werden. Bei Erreichen oder erstmaligem Überschreiten eines Datenvolumen-Schwellwerts durch das temporäre Datenvolumen werden die eine oder die mehreren dem erreichten oder überschrittenen Datenvolumen-Schwellwert zugehörigen Aktionen ausgelöst. Das temporäre Datenvolumen wird somit nach dem Ermitteln des temporären Datenvolumens mit den Datenvolumen-Schwellwerten verglichen, und bei deren Erreichen oder erstmaligem Überschreiten werden die eine oder die mehreren zugewiesenen Aktionen ausgeführt. Mit anderen Worten können bei dem beschriebenen Verfahren somit eine Überwachung des verbleibenden Datenvolumens einer SIM-Karte und das Einleiten von Aktionen erfolgen, wenn Schwellwerte erreicht oder überschritten werden.

Die Datenvolumen-Schwellwerte und/oder die Aktionen sind auf Seiten der externen Einheit festlegbar und/oder einsehbar. Zusätzlich können die Datenvolumen-Schwellwerte und/oder die Aktionen auch fahrzeugseitig einsehbar sein. Diese können dann an das Fahrzeug übermittelt werden. Bedienhandlungen, die Schwellwerte setzen oder die eine zu den Schwellwerten analoge Wirkungsweise haben, können somit beispielsweise von der externen Einheit und damit bevorzugt von der Landseite aus gesetzt werden. Weiterhin kann es möglich sein, durch die externe Einheit und damit bevorzugt durch die Landseite einen oder mehrere Schwellwerte zu überschreiben und so die zugehörigen Aktionen abzuschalten.

Eine Aktion weist das Erzeugen einer Diagnosemeldung auf, die an die externe Einheit übermittelt wird. Die Diagnosemeldung, die im Rahmen der Aktion übermittelt wird, enthält beispielsweise Informationen darüber, dass ein bestimmter Datenvolumen-Schwellwert erreicht oder erstmalig überschritten wurde. Hiermit kann etwa ein Betreiber des Fahrzeugs, beispielsweise im Fall eines Schienenfahrzeugs die Betriebszentrale, frühzeitig über das Überschreiten von durch die Schwellwerte definierte Grenzen informiert werden. Eine solche zur Dokumentation des Datenverbrauchs geeignete Aktion kann beispielsweise auch jedem Datenvolumen-Schwellwert zugeordnet werden.

Eine Aktion weist das Zurückstellen eines Datenpakets mit Daten zumindest eines festgelegten Datentyps auf. Gemäß einer weiteren Ausführungsform weist eine Aktion das Zurückstellen eines Datenpakets mit Daten einer festgelegten Mindestgröße auf. Mit anderen Worten werden betreffende Datenpakete beim Erreichen oder Überschreiten eines Schwellwertes nicht sofort nach der Entstehung übertragen, sondern werden zurückgestellt, bis, beispielsweise zu Beginn des nächsten vorbestimmten Zeitraums, wieder ein hinreichendes Datenvolumen zur Verfügung steht. Hierunter fallen beispielsweise Dateien, bei denen es gleich ist, ob eine Übertragung am Ende eines Zeitraums, also beispielsweise am Monatesende, oder am Anfang des nächsten Zeitraums, also beispielsweise am Anfang des nächsten Monats, stattfindet. Entsprechend weist die Aktion beispielsweise zusätzlich ein Übermitteln von Datenpaketen, die im vorbestimmten Zeitraum zurückgestellt wurden, über die Datenverbindung am Beginn eines unmittelbar folgenden Zeitraums auf. Mit anderen Worten können eine oder mehrere Aktionen definiert werden, die sich auf zumindest den unmittelbar folgenden Zeitraum erstrecken.

Gemäß einer weiteren Ausführungsform weist eine Aktion das Löschen eines Datenpakets mit Daten zumindest eines festgelegten Datentyps und/oder einer festgelegten Mindestgröße auf. Beim Erreichen des eine solche Aktion auslösenden Datenvolumen-Schwellwerts werden somit Dateien eines bestimmten Typs oder bestimmter Typen und/oder einer bestimmten Größe nicht mehr an die externe Einheit übertragen, sondern fahrzeugseitig gelöscht. Beispielsweise können Daten, die GNSS-Informationen enthalten, in diese Kategorie fallen. Besonders bevorzugt weist die Aktion zusätzlich das Erzeugen einer Diagnosemeldung auf, die über das Löschen informiert. Die Diagnosemeldung kann gleich oder zu einem späteren Zeitpunkt übermittelt werden. Mit anderen Worten wird das fahrzeugseitige Löschen von Daten durch die Diagnosemeldung dokumentiert.

Gemäß einer weiteren Ausführungsform weist eine Aktion ein Zusammenfassen von mehreren Datenpaketen zu einem gemeinsamen Datenpaket mit einer festgelegten Mindestgröße auf. Vorzugsweise erfolgt ein Übermitteln des gemeinsamen Datenpakets erst nach Erreichen oder Überschreiten der Mindestgröße. Beim Übertragen von kurzen Dateien entsteht durch die üblicherweise verwendeten Kommunikationsprotokolle ein hoher sogenannter Overhead, also ein großer Anteil von Verwaltungsdaten. Der Overhead ist bei kurzen Dateien prozentual höher als bei der Übertragung von langen Dateien. Daher kann bevorzugt eine Aktion definiert werden, die beim Erreichen oder Überschreiten eines Datenvolumen-Schwellwerts die Übertragung von kurzen Dateien zurückstellt, diese beispielsweise in ein Archiv zusammenkopiert und das Archiv erst dann überträgt, wenn das Archiv eine bestimmte Länge erreicht hat. Alternativ oder zusätzlich kann ein Übermitteln des Archivs, also des gemeinsamen Datenpakets, in einem definierbaren Zeitintervall oder zu einem definierbaren Zeitpunkt vorgesehen werden.

Gemäß einer weiteren Ausführungsform weist eine Aktion eine Vergrößerung eines Zeitintervalls zwischen in regelmäßigen Abständen zu übermittelnden Daten auf. Beispielsweise können in diesem Fall die Zeitintervalle für sogenannte Heartbeats erhöht werden, also für Benachrichtigungen, dass das Fahrzeug betriebsbereit ist und seine Aufgaben erfüllen kann, die vom Fahrzeug an die externen Einheit gesendet werden.

Bei dem hier beschriebenen Verfahren kann das SIM-Karten-Datenvolumen eines Fahrzeugs überwacht werden. Beim Überschreiten von Grenzen werden verschiedene, den jeweiligen Grenzen zugewiesene Aktionen ausgelöst. Damit kann die Gefahr verringert oder sogar ganz ausgeschlossen werden, dass plötzlich keine Daten mehr übertragen werden, ohne dass der Grund hierfür einem Betreiber auf dem landseitigen System offenbart wird. Aktuelle Informationen über das bereits verbrauchte und/oder das noch verfügbare SIM-Karten-Datenvolumen können von einem landseitigen System abgefragt werden. Zu dem Zeitpunkt, an dem durch den Mobilfunkbetreiber ein neues Datenvolumen zugewiesen wird, wird der Zähler für das Kartenvolumen zurückgesetzt.

Die oben genannten Eigenschaften, Merkmale und Vorteile der Erfindung und die Art und Weise, wie diese erreicht werden, werden durch die folgende Beschreibung der Ausführungsbeispiele der Erfindung in Verbindung mit den entsprechenden Figuren weitergehend erläutert.

Es zeigen:
- Figur 1: eine schematische Darstellung eines Fahrzeugs mit einer Datenübermittlungseinheit gemäß einem Ausführungsbeispiel und
- Figur 2: eine schematische Darstellung eines Datenverbindungbetriebsverfahren zum Betrieb einer drahtlosen Datenverbindung mittels einer Datenübermittlungseinheit gemäß einem weiteren Ausführungsbeispiel.

In den Ausführungsbeispielen und Figuren können gleiche, gleichartige oder gleich wirkende Elemente jeweils mit denselben Bezugszeichen versehen sein. Die dargestellten Elemente und deren Größenverhältnisse untereinander sind nicht als maßstabsgerecht anzusehen, vielmehr können einzelne Elemente, wie zum Beispiel Schichten, Bauteile, Bauelemente und Bereiche, zur besseren Darstellbarkeit und/oder zum besseren Verständnis übertrieben groß dargestellt sein.

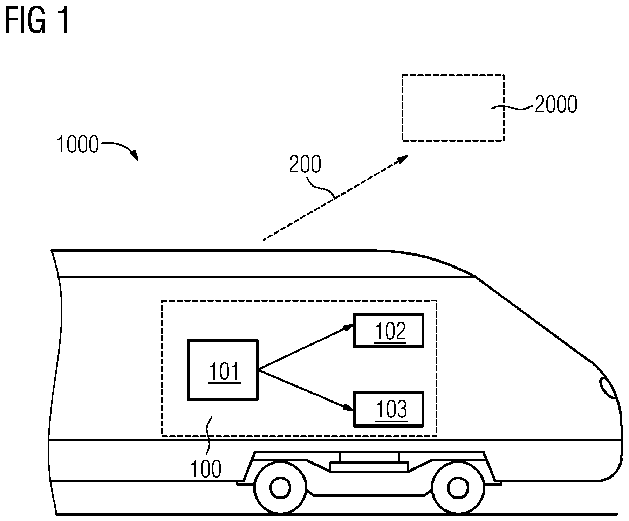

In Figur 1 ist ein Ausführungsbeispiel eines Fahrzeugs 1000 gezeigt, das eine Datenübermittlungseinheit 100 zur Übermittlung von Daten über eine drahtlose Datenverbindung 200 zwischen dem Fahrzeug 1000 und einer externen Einheit 2000 aufweist.

In Figur 1 ist das Fahrzeug 1000 gemäß einem bevorzugten Ausführungsbeispiel ein Schienenfahrzeug, also insbesondere ein Zug oder ein Teil eines Zugs wie etwa ein Triebwagen. Das Fahrzeug 1000 kann weiterhin auch beispielsweise ein Bus oder ein Lastkraftwagen sein. Die externe Einheit 2000 ist besonders bevorzugt eine ortsgebundene Einheit, also insbesondere eine landseitige Einheit wie etwa eine Betriebszentrale, von der aus eine Koordinierung und/oder Diagnose des Fahrzeugs 1000 erfolgen kann.

Die Datenverbindung 200 ist eine Datenverbindung über ein Übertragungsnetz, das besonders bevorzugt ein Mobilfunknetz ist. Zur Nutzung der Datenverbindung 200 wird im gezeigten Ausführungsbeispiel eine SIM-Karte und somit ein Mobilfunknetz verwendet. Alternativ können auch mehrere SIM-Karten verwendet werden, so dass mehrere Mobilfunknetze zur Verfügung stehen können. Die folgende Beschreibung gilt gleichermaßen für die Nutzung eines oder mehrere Mobilfunknetze, wobei das im Folgenden beschriebene Verfahren für jedes der Mobilfunknetze, also in Bezug auf jede genutzte SIM-Karte, durchgeführt werden kann.

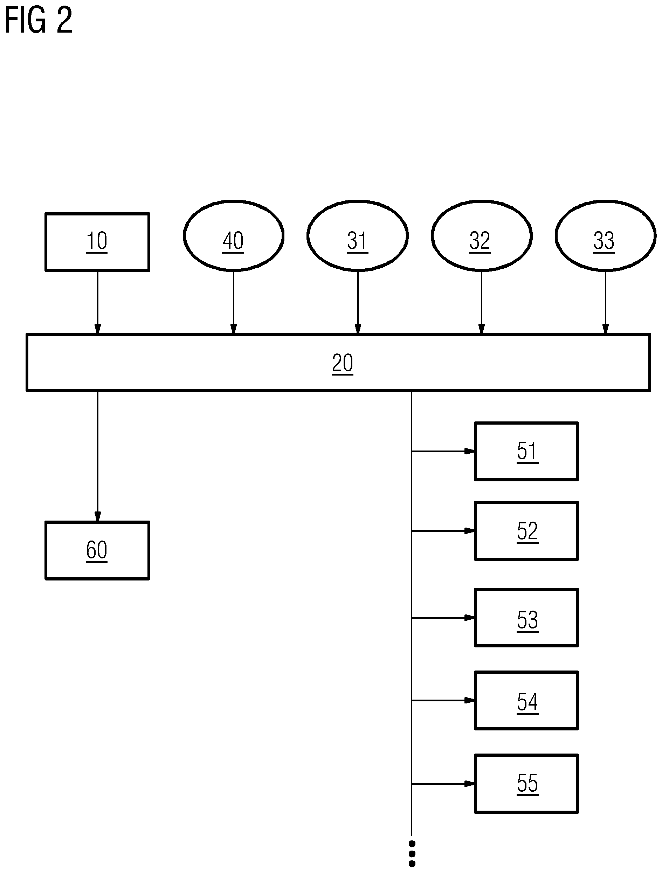

Die Datenübermittlungseinheit 100 weist eine Datenverarbeitungseinheit 101, eine Datenübertragungseinheit 102 und eine Speichereinheit 103 auf. Die Datenübertragungseinheit 102 und/oder die Speichereinheit 103 können auch als Teil der Datenverarbeitungseinheit 101 ausgebildet sein. Die Datenverarbeitungseinheit 101 ist dazu eingerichtet und vorgesehen, anhand einer Prüfung von Kriterien und Parametern die Übermittlung von Daten über die Datenverbindung 200 sowie die Einleitung von Aktionen gemäß dem in Verbindung mit Figur 2 beschriebenen Datenverbindungbetriebsverfahren zu steuern. Die Datenverarbeitungseinheit 101 kann dazu beispielsweise Daten von einem Zeitgeber, einem GNSS- oder anderen Lokalisierungssystem, einem Passenger-Counting-System, Sensorsystemen, Diagnosesystemen, Systemen, die abrechnungsrelevante Daten ermitteln, und anderen Systemen des Fahrzeugs 1000 oder der externen Einheit 2000 erhalten. Die Datenübertragungseinheit 102 weist eine oder mehrere vorab erwähnte SIM-Karten auf und ist dazu vorgesehen und eingerichtet, bei entsprechender Freigabe durch die Datenverarbeitungseinheit 101 Daten über die Datenverbindung 200 an die externe Einheit 2000 zu übermitteln. Die Speichereinheit 103 ist dazu vorgesehen und eingerichtet, bei entsprechender Freigabe durch die Datenverarbeitungseinheit 101 Daten zu speichern. Insbesondere können zu speichernde Daten solche sein, die im Hinblick auf eine Übermittlung über die Datenverbindung 200 zurückgestellt werden, um diese zu einem späteren Zeitpunkt zu übermitteln.

In Figur 2 ist ein Ausführungsbeispiel für ein Datenverbindungbetriebsverfahren zum Betrieb der in Figur 1 angedeuteten drahtlosen Datenverbindung 200 mittels der Datenübermittlungseinheit 100 zwischen dem Fahrzeug 1000 und der externen Einheit 2000 gezeigt. Das Verfahren dient insbesondere zum Betrieb der drahtlosen Datenverbindung innerhalb eines vorbestimmten Zeitraums. Der vorbestimmte Zeitraum ist Teil einer Folge von Zeiträumen, wobei für jeden der Zeiträume jeweils ein maximales Datenvolumen vorgesehen ist. Insbesondere entspricht der vorbestimmte Zeitraum beispielsweise einem Kalendermonat, so dass die Folge von Zeiträumen eine Folge von aufeinanderfolgenden Kalendermonaten ist. Zu Beginn jedes Zeitraums steht das maximale Datenvolumen zur Verfügung. Mit jedem Datenpaket, das innerhalb des Zeitraums über die Datenverbindung übermittelt wird, wird Datenvolumen verbraucht, so dass sich das restliche zur Verfügung stehende Datenvolumen reduziert. Ein Überschreiten des maximalen Datenvolumens kann beispielsweise nicht möglich sein, so dass bei einem Verbrauch des maximalen Datenvolumens ein Abbruch der Übermittlung über die Datenverbindung die Folge ist. Alternativ hierzu kann ein Überschreiten des maximalen Datenvolumens zwar möglich sein, jedoch aber erhöhte Kosten nach sich ziehen und daher unerwünscht sein.

Steht ein Datenpaket mit Daten 10 zur Übermittlung bereit, erfolgt mittels der in Verbindung mit der Figur 1 beschriebenen Datenverarbeitungseinheit 101 eine Prüfung 20 der weiter zu unternehmenden Schritte. Hierzu werden für das Verfahren ein oder mehrere Datenvolumen-Schwellwerte 31, 32, 33 festgelegt und für die Prüfung 20 bereitgestellt. Die Datenvolumen-Schwellwerte 31, 32, 33 können einmalig festgelegt werden und für das Verfahren innerhalb des vorbestimmten Zeitraums zur Verfügung stehen. Weiterhin können Datenvolumen-Schwellwerte auch im Verlauf des vorbestimmten Zeitraums festgelegt, geändert oder gelöscht werden. Rein beispielhaft sind drei Datenvolumen-Schwellwerte gezeigt. Für das Verfahren können jedoch auch mehr oder weniger Datenvolumen-Schwellwerte festgelegt werden. Die Datenvolumen-Schwellwerte 31, 32, 33 sind jeweils kleiner oder gleich und bevorzugt kleiner als das maximale Datenvolumen. Beispielsweise werden verschiedene, gestaffelte Datenvolumen-Schwellwerte 31, 32, 33 jeweils bei einem Datenvolumen von 10% oder 25% oder 50% oder 75% oder 90% des maximalen Datenvolumens festgelegt, im gezeigten Ausführungsbeispiel beispielsweise einer bei 25%, einer bei 50% und einer bei 75%.

Im Rahmen der Prüfung 20 wird weiterhin ein temporäres Datenvolumen 40 zu zumindest einem gegebenen Zeitpunkt innerhalb des vorbestimmten Zeitraums bestimmt, wobei das temporäre Datenvolumen 40 der Summe der Datenpakete entspricht, die seit einem Beginn des Zeitraums bis zum gegebenen Zeitpunkt über die Datenverbindung übermittelt wurden. Das temporäre Datenvolumen 2 gibt somit Auskunft darüber, wieviel Datenvolumen bisher im vorbestimmten Zeitraum verbraucht wurde. Der gegebene Zeitpunkt liegt beispielsweise jedes Mal nach der Übermittlung von Daten über die Datenverbindung vor, so dass jedes Mal, wenn über die Datenverbindung ein Datenpaket geschickt wurde, ermittelt wird, welches Datenvolumen bisher seit Beginn des vorbestimmten Zeitraums verbraucht wurde. Das temporäre Datenvolumen wird somit im laufenden Betrieb durch Aufsummieren der bisher übermittelten Daten ermittelt. Mit anderen Worten wird vor dem Übermitteln der Daten 10 das temporäre Datenvolumen 40 ermittelt. Hierzu ist es besonders bevorzugt, wenn aus den physikalischen Übertragungsschnittstellen wie beispielsweise PPP die Daten ausgelesen werden, die gesendet und empfangen werden, da durch das Auslesen aus den physikalischen Schnittstellen der Datenübermittlungseinheit auch Protokollinformationen, die keine Nutzdaten enthalten, in das Datenvolumen, das verbraucht wird, eingehen. Bei Erreichen des Endes des vorbestimmten Zeitraums, was dem Beginn des nächsten Zeitraums entspricht, wird das bisher ermittelte temporäre Datenvolumen auf Null zurückgesetzt. Unabhängig vom Datenvolumenverbrauch innerhalb des Zeitraums steht zu Beginn des nächsten Zeitraums somit wieder das dem maximalen Datenvolumen entsprechende Datenvolumen zur Verfügung.

Jedem der festgelegten Datenvolumen-Schwellwerte 31, 32, 33 werden eine oder mehrere zugehörige Aktionen 51, 52, 53, 54, 55 zugeordnet. Der Übersichtlichkeit halber sind in Figur 2 fünf verschiedene Aktionen 51, 52, 53, 54, 55 angedeutet, die beispielsweise unterschiedlichen Schwellwerten 31, 32, 33 zugeordnet sein können. Eine Aktion kann auch mehreren Schwellwerten zugeordnet werden. Durch die Prüfung 20 wird bestimmt, ob das temporäre Datenvolumen 2 einen oder mehrere Datenvolumen-Schwellwerte 31, 32, 33 erreicht oder bereits erstmalig überschritten hat. Bei Erreichen oder erstmaligem Überschreiten eines Datenvolumen-Schwellwerts 31, 32, 33 durch das temporäre Datenvolumen 2 werden die eine oder mehreren dem erreichten oder überschrittenen Datenvolumen-Schwellwert zugehörigen Aktionen ausgelöst. Das ermittelte temporäre Datenvolumen 40 wird somit mit den Datenvolumen-Schwellwerten 31, 32, 33 verglichen. Somit können durch die Prüfung 20 eine Überwachung des verbleibenden Datenvolumens einer SIM-Karte und das Einleiten von Aktionen erfolgen, wenn Schwellwerte überschritten werden. Solange kein Datenvolumen-Schwellwert erreicht worden ist oder solange in Bezug auf die Daten 10 keine Aktion ausgelöst wurde, die eine Übermittlung der Daten 10 verhindert, erfolgt nach der Prüfung 20 die Übertragung 60 der Daten 10 an die externe Einheit.

Die Datenvolumen-Schwellwerte 31, 32, 33 und/oder die Aktionen 51, 52, 53, 54, 55 sind auf Seiten der externen Einheit festlegbar und/oder einsehbar sein und werden an das Fahrzeug übermittelt. Zusätzlich können die Datenvolumen-Schwellwerte 31, 32, 33 und/oder die Aktionen 51, 52, 53, 54, 55 auch fahrzeugseitig einsehbar sein. Bedienhandlungen, die Schwellwerte 31, 32, 33 setzen oder die eine zu den Schwellwerten analoge Wirkungsweise haben, können somit beispielsweise von der externen Einheit und damit bevorzugt von der Landseite aus gesetzt werden. Weiterhin kann es möglich sein, durch die externe Einheit und damit bevorzugt durch die Landseite die Schwellwerte 31, 32, 33 zu überschreiben und so Aktionen 51, 52, 53, 54, 55 abzuschalten.

Beispielsweise weist eine der Aktionen 51, 52, 53, 54, 55 das Erzeugen einer Diagnosemeldung auf, die an die externe Einheit übermittelt wird. Die Diagnosemeldung enthält beispielsweise Informationen, dass ein bestimmter Datenvolumen-Schwellwert 31, 32, 33 erreicht oder erstmalig überschritten wurde. Dadurch kann ein Betreiber des Fahrzeugs, beispielsweise im Fall eines Schienenfahrzeugs, frühzeitig über das Überschreiten von Grenzen informiert werden. Die zur Dokumentation des Datenverbrauchs geeignete Aktion kann besonders bevorzugt jedem Datenvolumen-Schwellwert 31, 32, 33 zugeordnet werden, so dass jedes Mal, wenn ein weiterer Datenvolumen-Schwellwert erreicht oder erstmalig überschritten wurde, eine entsprechende Diagnosemeldung übermittelt wird. Beispielsweise kann dem kleinsten Datenvolumen-Schwellwert nur diese Aktion zugeordnet sein und lediglich zu Informationszecken dienen, so dass diese Aktion keinen Einfluss auf die Übermittlung von Daten 10 hat.

Beispielsweise weist eine weitere der Aktionen 51, 52, 53, 54, 55 ein Löschen eines Datenpakets mit Daten 10 zumindest eines festgelegten Datentyps und/oder einer festgelegten Mindestgröße auf. Beim Erreichen des dieser Aktion zugeordneten Datenvolumen-Schwellwerts werden nach entsprechender Prüfung 20 somit Dateien eines bestimmten Typs oder bestimmter Typen und/oder einer bestimmten Größe nicht mehr für die Übertragung 60 weiterverarbeitet und an die externe Einheit übertragen, sondern fahrzeugseitig gelöscht. Beispielsweise können Daten, die GNSS-Informationen enthalten, in diese Kategorie fallen. Besonders bevorzugt weist eine das Löschen von Daten bewirkende Aktion zusätzlich das Erzeugen einer Diagnosemeldung auf, die über das Löschen informiert. Somit kann das fahrzeugseitige Löschen von Daten 10 durch die Diagnosemeldung dokumentiert werden. Die Diagnosemeldung kann an die externe Einheit gleich oder zu einem späteren Zeitpunkt übermittelt werden.

Beispielsweise weist eine weitere der Aktionen 51, 52, 53, 54, 55 ein Zurückstellen 8 eines Datenpakets mit Daten 10 zumindest eines festgelegten Datentyps und/oder einer festgelegten Mindestgröße auf. Dadurch werden betreffende Datenpakete beim Erreichen oder Überschreiten eines zugeordneten Schwellwertes 31, 32, 33 nicht sofort nach der Entstehung übertragen, sondern werden zurückgestellt, bis, beispielsweise zu Beginn des nächsten vorbestimmten Zeitraums, wieder ein ausreichendes Datenvolumen vorhanden ist. Die für das Zurückstellen vorgesehenen Daten 10 werden somit anstelle einer Übertragung 60 in der in Verbindung mit der Figur 1 beschriebenen Speichereinheit 103 gespeichert. Hierunter fallen beispielsweise Dateien, die einem Passenger-Counting-System entstammen. Bei solchen Daten kann es egal sein, ob eine Übertragung am Ende eines Zeitraums, also beispielsweise am Monatesende, oder am Anfang des nächsten Zeitraums, also beispielsweise am Anfang des nächsten Monats, stattfindet. Entsprechend weist diese Aktion beispielsweise zusätzlich ein Übermitteln von Datenpaketen über die Datenverbindung am Beginn eines unmittelbar folgenden Zeitraums auf, die im vorbestimmten Zeitraum zurückgestellt wurden.

Beispielsweise weist eine weitere der Aktionen 51, 52, 53, 54, 55 ein Zusammenfassen von mehreren Datenpaketen zu einem gemeinsamen Datenpaket mit einer festgelegten Mindestgröße auf. Dabei erfolgt besonders bevorzugt eine Übertragung 60 des gemeinsamen Datenpakets erst nach Erreichen oder Überschreiten der Mindestgröße. Insbesondere kann bevorzugt eine Aktion definiert werden, die beim Überschreiten eines Datenvolumen-Schwellwerts 31, 32, 33 die Übertragung von kurzen Dateien zurückstellt, diese beispielsweise in ein Archiv zusammenkopiert und speichert und erst dann überträgt, wenn das Archiv eine bestimmte Länge erreicht hat, so dass der prozentuale Overhead-Anteil der zu übermittelnden Daten verringert werden kann. Alternativ oder zusätzlich kann ein Übermitteln des Archivs, also des gemeinsamen Datenpakets, in einem definierbaren Zeitintervall oder zu einem definierbaren Zeitpunkt vorgesehen werden. Beispielsweise ist es nicht sinnvoll, Daten, die GNSS-Informationen enthalten, online, also sofort, bereitzustellen, wenn auf der Seite der externen Einheit, also insbesondere auf der Landseite, in den Nachtstunden kein Personal für die Sichtung oder Beobachtung im Dienst ist. Für die Nachstunden kann es somit denkbar sein, die Daten in Form eines Archiv zu bündeln und das Archiv erst später zu übertragen, wobei aus dem Archiv dann alle notwendigen Offlinedarstellungen wie Landkartendarstellungen mit den Positionen des Fahrzeugs erstellt werden können.

Beispielsweise weist eine weitere der Aktionen 51, 52, 53, 54, 55 eine Zeitintervalländerung 10, insbesondere eine Vergrößerung eines Zeitintervalls zwischen in regelmäßigen Abständen zu übermittelnden Daten auf. So können die Zeitintervalle für Heartbeats vergrößert werden, so dass diese Art von Daten 10 seltener zur Übertragung 60 anfallen.

Durch die beschriebene Aktionen und eine geeignete Zuordnung zu den Datenvolumen-Schwellwerten kann somit erreicht werden, dass mit steigendem Datenvolumenverbrauch eine Übermittlung von Daten und damit ein weiterer Datenverbrauch durch Löschen, Zurückstellen, Zusammenfassen und/oder Zeitintervalländerungen reduziert werden kann. Dadurch kann verhindert werden, dass das maximale Datenvolumen unbeabsichtigt und unerkannt erreicht wird.

Obwohl die Erfindung anhand von Ausführungsbeispielen detailliert dargestellt und beschrieben wurde, ist die Erfindung nicht auf die offenbarten Ausführungsbeispiele und die darin erläuterten konkreten Merkmalskombinationen beschränkt. Weitere Variationen der Erfindung können von einem Fachmann erhalten werden, ohne den Schutzumfang der beanspruchten Erfindung zu verlassen.

### Bezugszeichenliste

- 10: Daten
- 20: Prüfung
- 31, 32, 33: Datenvolumen-Schwellwert
- 40: temporäres Datenvolumen
- 51, 52, 53, 54, 55: Aktion
- 60: Übertragung
- 100: Datenübermittlungseinheit
- 101: Datenverarbeitungseinheit
- 102: Datenübertragungseinheit
- 103: Speichereinheit
- 200: Datenverbindung
- 1000: Fahrzeug
- 2000: externe Einheit

## Patentansprüche

1. Datenverbindungbetriebsverfahren zum Betrieb einer drahtlosen Datenverbindung (200) mittels einer Datenübermittlungseinheit (100) eines Fahrzeugs zwischen dem Fahrzeug (1000) und einer externen Einheit (2000) innerhalb eines vorbestimmten Zeitraums einer Folge von Zeiträumen, bei dem
- im vorbestimmten Zeitraum ein maximales Datenvolumen zur Übertragung von Datenpaketen über die Datenverbindung (200) vorgesehen ist,
- ein oder mehrere Datenvolumen-Schwellwerte (31, 32, 33) festgelegt werden, wobei jedem Datenvolumen-Schwellwert (31, 32, 33) eine oder mehrere zugehörige Aktionen (51, 52, 53, 54, 55) zugeordnet werden,
- ein temporäres Datenvolumen (40) zu zumindest einem gegebenen Zeitpunkt innerhalb des vorbestimmten Zeitraums bestimmt wird, wobei das temporäre Datenvolumen (40) der Summe der Datenpakete entspricht, die seit einem Beginn des Zeitraums bis zum gegebenen Zeitpunkt über die Datenverbindung (200) übermittelt wurden,
- bei Erreichen oder erstmaligem Überschreiten eines Datenvolumen-Schwellwerts (31, 32, 33) durch das temporäre Datenvolumen (40) die eine oder mehreren dem erreichten oder überschrittenem Datenvolumen-Schwellwert (31, 32, 33) zugehörigen Aktionen (51, 52, 53, 54, 55) ausgelöst werden,
wobei eine Aktion (51) das Erzeugen einer Diagnosemeldung aufweist, die an die externe Einheit (2000) übermittelt wird, wobei die Datenvolumen-Schwellwerte (31, 32, 33) und die Aktionen (51, 52, 53, 54, 55) auf Seiten der externen Einheit festgelegt werden und einsehbar sind,
wobei eine Aktion (53) das Zurückstellen eines Datenpakets mit Daten (10) zumindest eines festgelegten Datentyps aufweist, wobei es sich bei der externen Einheit um einen Teil einer Betriebszentrale für das Fahrzeug oder um ein anderes Fahrzeug handelt.

2. Datenverbindungbetriebsverfahren nach Anspruch 1, bei dem eine Aktion (52) das Löschen eines Datenpakets mit Daten (10) zumindest eines festgelegten Datentyps und/oder einer festgelegten Mindestgröße und das Erzeugen einer Diagnosemeldung aufweist.

3. Datenverbindungbetriebsverfahren nach einem der vorherigen Ansprüche, bei dem eine Aktion (53) das Zurückstellen eines Datenpakets mit Daten (10) einer festgelegten Mindestgröße aufweist.

4. Datenverbindungbetriebsverfahren nach Anspruch 3, bei dem am Beginn eines unmittelbar folgenden Zeitraums Datenpakete, die im vorbestimmten Zeitraum zurückgestellt wurden, über die Datenverbindung (200) übermittelt werden.

5. Datenverbindungbetriebsverfahren nach einem der vorherigen Ansprüche, bei dem eine Aktion (54) ein Zusammenfassen von mehreren Datenpaketen zu einem gemeinsamen Datenpaket mit einer festgelegten Mindestgröße aufweist.

6. Datenverbindungbetriebsverfahren nach einem der vorherigen Ansprüche, bei dem eine Aktion (55) eine Vergrößerung eines Zeitintervalls zwischen in regelmäßigen Abständen zu übermittelnden Datenpaketen aufweist.

7. Datenverbindungbetriebsverfahren nach einem der vorherigen Ansprüche, bei dem der zumindest eine gegebene Zeitpunkt zur Bestimmung des temporären Datenvolumens jedes Mal nach der Übermittlung von Datenpaketen über die Datenverbindung vorliegt.

8. Datenverbindungbetriebsverfahren nach einem der vorherigen Ansprüche, bei dem der vorbestimmte Zeitraum einem Kalendermonat entspricht.

9. Datenverbindungbetriebsverfahren nach einem der vorherigen Ansprüche, bei dem bei Erreichen eines Endes des Zeitraums das bisher ermittelte temporäre Datenvolumen (40) auf Null zurückgesetzt wird.

10. Datenverbindungbetriebsverfahren nach einem der vorherigen Ansprüche, bei dem die Datenvolumen-Schwellwerte (31, 32, 33) und/oder die Aktionen (51, 52, 53, 54, 55) fahrzeugseitig einsehbar sind.

11. Datenübermittlungseinheit (100), die zur Durchführung des Datenverbindungbetriebsverfahrens gemäß einem der vorherigen Ansprüche vorgesehen und eingerichtet ist, wobei über die Datenübermittlungseinheit (100) Datenverbindungen (200) über eines oder mehrere Übertragungsnetze bereitgestellt werden und das Verfahren für jedes Übertragungsnetz durchgeführt wird.

12. Fahrzeug (1000) mit einer Datenübermittlungseinheit (100) nach Anspruch 11.

13. Fahrzeug (1000) nach Anspruch 12, wobei das Fahrzeug (1000) ein Schienenfahrzeug ist.

## Claims

1. Data link operating method for operating a wireless data link (200) by means of a data transmission unit (100) of a vehicle between the vehicle (1000) and an external unit (2000) within a predetermined time interval of a sequence of time intervals, in which
- a maximum data volume for the transmission of data packets by way of the data link (200) is provided in the predetermined time interval,
- one or more data volume threshold values (31, 32, 33) are defined, wherein one or more associated actions (51, 52, 53, 54, 55) are assigned to each data volume threshold value (31, 32, 33),
- a temporary data volume (40) is determined at at least one given time instant within the predetermined time interval, wherein the temporary data volume (40) corresponds to the total of the data packets, which have been transmitted by way of the data link (200) since the start of the time interval until the given time instant,
- when a data volume threshold value (31, 32, 33) is reached or first exceeded by the temporary data volume (40), the one or more actions (51, 52, 53, 54, 55) associated with the achieved or exceeded data volume threshold value (31, 32, 33) is/are triggered,
wherein an action (51) has the generation of a diagnostic message, which is transmitted to the external unit (2000), wherein the data volume threshold values (31, 32, 33) and the actions (51, 52, 53, 54, 55) are defined on the part of the external unit and are visible,
wherein one action (53) features the resetting of a data packet with data (10) of at least one defined data type, wherein the external unit is part of an operating centre for the vehicle or is another vehicle.

2. Data link operating method according to claim 1, in which an action (52) has the deletion of a data packet with data (10) of at least one defined data type and/or a defined minimum size and the generation of a diagnostic message.

3. Data link operating method according to one of the preceding claims, in which an action (53) has the resetting of a data packet with data (10) of a defined minimum size.

4. Data link operating method according to claim 3, in which at the start of a directly following time interval, data packets, which have been reset in the predetermined time interval, are transmitted by way of the data link (200).

5. Data link operating method according to one of the preceding claims, in which an action (54) has a combination of several data packets to form a shared data packet with a defined minimum size.

6. Data link operating method according to one of the preceding claims, in which an action (55) has an enlargement of a time interval between data packets to be transmitted at regular intervals.

7. Data link operating method according to one of the preceding claims, in which the at least one given time instant for determining the temporary data volume exists each time after transmitting data packets by way of the data link.

8. Data link operating method according to one of the preceding claims, in which the predetermined time interval corresponds to a calendar month.

9. Data link operating method according to one of the preceding claims, in which the previously determined temporary data volume (40) is reset to zero when one end of the time interval is reached.

10. Data link operating method according to one of the preceding claims, in which the data volume threshold values (31, 32, 33) and/or the actions (51, 52, 53, 54, 55) are visible on the vehicle side.

11. Data transmission unit (100), which is provided and designed to carry out the data link operating method according to one of the preceding claims, wherein data links (200) by way of one or more transmission networks are provided by way of the data transmission unit (100) and the method is carried out for each transmission network.

12. Vehicle (1000) with a data transmission unit (100) according to claim 11.

13. Vehicle (1000) according to claim 12, wherein the vehicle (1000) is a rail vehicle.

## Revendications

1. Procédé d'exploitation d'une liaison de données pour l'exploitation d'une liaison (200) de données sans fil au moyen d'une unité (100) de transmission de données d'un véhicule entre le véhicule (1000) et une unité (2000) extérieure dans un laps de temps déterminé à l'avance d'une séquence de laps de temps, dans lequel
- dans le laps de temps déterminé à l'avance, il est prévu un volume maximum de données pour la transmission de paquets de données par la liaison (200) de données,
- on fixe une ou plusieurs valeurs (31, 32, 33) de seuil de volume de données, dans lequel, à chaque valeur (31, 32, 33) de seuil de volume de données, on affecte une ou plusieurs actions (51, 52, 53, 54, 55) leur appartenant,
- on détermine un volume (40) temporaire de données à au moins un instant donné dans le laps de temps déterminé à l'avance, dans lequel le volume (40) temporaire de données correspond à la somme des paquets de données, qui, depuis un début du laps de temps jusqu'à l'instant donné, ont été transmis par la liaison (200) de données,
- lorsqu'est atteinte ou dépassée pour la première fois une valeur (31, 32, 33) de seuil de volume de données par le volume (40) temporaire de données, on déclenche la une ou les plusieurs actions (51, 52, 53, 54, 55) appartenant à la valeur (31, 32, 33) de seuil de volume de données atteinte ou dépassée,
dans lequel
une action (51) comporte la production d'un message de diagnostic que l'on transmet à l'unité (2000) extérieure, dans lequel les valeurs (31, 32, 33) de seuil de volume de données et les actions (51, 52, 53, 54, 55) sont fixées du côté de l'unité extérieure et peuvent être vues,
dans lequel une action (53) comporte la remise à zéro d'un paquet de données par des données (10) d'au moins un type de données fixé, dans lequel l'unité extérieure est une partie d'un centre d'exploitation pour le véhicule ou un autre véhicule.

2. Procédé d'exploitation d'une liaison de données suivant la revendication 1, dans lequel une action (52) comporte l'effacement d'un paquet de données par des données (10) d'au moins un autre type de données fixé et/ou une dimension minimum fixée et la production d'un message de diagnostic.

3. Procédé d'exploitation d'une liaison de données suivant l'une des revendications précédentes, dans lequel une action (53) comporte la remise à zéro d'un paquet de données par des données (10) d'une grandeur minimum fixée.

4. Procédé d'exploitation d'une liaison de données suivant la revendication 3, dans lequel, au début d'un laps de temps immédiatement suivant, on transmet, par la liaison (200) de données, des paquets de données, qui ont été remis à zéro dans le laps de temps déterminé à l'avance.

5. Procédé d'exploitation d'une liaison de données suivant l'une des revendications précédentes, dans lequel une action (54) comporte un rassemblement de plusieurs paquets de données en un paquet de données commun d'une grandeur minimum fixée.

6. Procédé d'exploitation d'une liaison de données suivant l'une des revendications précédentes, dans lequel une action (55) comporte un agrandissement d'un intervalle de temps entre des paquets à transmettre à des intervalles réguliers.

7. Procédé d'exploitation d'une liaison de données suivant l'une des revendications précédentes, dans lequel le au moins un instant donné de détermination du volume temporaire de données se trouve chaque fois après la détermination de paquets de données par la liaison de données.

8. Procédé d'exploitation d'une liaison de données suivant l'une des revendications précédentes, dans lequel le laps de temps déterminé à l'avance correspond à un mois calendaire.

9. Procédé d'exploitation d'une liaison de données suivant l'une des revendications précédentes, dans lequel, lorsqu'est atteint la fin du laps de temps, on remet à zéro le volume (40) temporaire de données déterminé jusqu'ici.

10. Procédé d'exploitation d'une liaison de données suivant l'une des revendications précédentes, dans lequel les valeurs (31, 32, 33) de seuil de volume de données et/ou les actions (51, 52, 53, 54, 55) peuvent être vues du côté du véhicule.

11. Unité (100) de transmission de données, qui est prévue et qui est agencée pour effectuer le procédé d'exploitation d'une liaison de données suivant l'une des revendications précédentes, dans laquelle, par l'unité (100) de transmission de données, des liaisons (200) de données sont mises à disposition par un ou plusieurs réseaux de transmission, et le procédé est effectué pour chaque réseau de transmission.

12. Véhicule (1000) comprenant une unité (100) de transmission de données suivant la revendication 11.

13. Véhicule (1000) suivant la revendication 12, dans lequel le véhicule (1000) est un véhicule ferroviaire.
